(19)

**Europäisches Patentamt**

**European Patent Office**

**Office européen des brevets**

(11) **EP 4 382 743 A1**

(12) **DEMANDE DE BREVET EUROPEEN**

(43) Date de publication:
**12.06.2024 Bulletin 2024/24**

(21) Numéro de dépôt: **23211088.2**

(22) Date de dépôt: **21.11.2023**

(51) Classification Internationale des Brevets (IPC):
**F03D 7/02** *(2006.01)*        **F03D 7/04** *(2006.01)*

(52) Classification Coopérative des Brevets (CPC):
**F03D 7/028; F03D 7/0204; F03D 7/046;**
**F03D 7/049;** F05B 2270/20

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **05.12.2022 FR 2212772**

(71) Demandeurs:
• **IFP Energies nouvelles**
  **92500 Rueil-Malmaison (FR)**
• **Institut de Recherche en Informatique et en Automatique**
  **78150 Le Chesnay-Rocquencourt (FR)**

(72) Inventeurs:
• **BOUBA, Eva**
  **92852 RUEIL-MALMAISON CEDEX (FR)**
• **DUBUC, Donatien**
  **92852 RUEIL-MALMAISON CEDEX (FR)**
• **ZHU, Jiamin**
  **92852 RUEIL-MALMAISON CEDEX (FR)**
• **BIZON MONROC, Claire**
  **75589 PARIS CEDEX 12 (FR)**
• **BUSIC, Ana**
  **75589 PARIS CEDEX 12 (FR)**

(74) Mandataire: **IFP Energies nouvelles**
  **Département Propriété Industrielle**
  **Rond Point de l'échangeur de Solaize**
  **BP3**
  **69360 Solaize (FR)**

(54) **PROCÉDÉ DE CONTROLE D'UNE FERME D EOLIENNES AU MOYEN D'UNE METHODE D APPRENTISSAGE PAR RENFORCEMENT**

(57)    La présente invention concerne un procédé de contrôle d'une ferme d'éoliennes, dans lequel on met en oeuvre de manière décentralisée (pour chaque éolienne) une méthode d'apprentissage par renforcement (RL), pour laquelle la récompense (REC) est calculée en fonction d'un temps de propagation du sillage (DEL). Ainsi, la récompense est bien représentative de l'effet de la dernière action (par exemple le contrôle du lacet antérieur).

Figure 2

**Description**

**Domaine technique**

La présente invention concerne le domaine du contrôle d'une ferme d'éoliennes pour maximiser la puissance produite.

Une ferme d'éoliennes, également appelé parc éolien ou centrale éolienne est un site regroupant une pluralité d'éoliennes produisant de l'électricité. Ce site peut être sur terre ou en mer. On distingue ainsi des fermes éoliennes terrestres et des fermes éoliennes « offshore », c'est-à-dire en mer.

Les éoliennes de ces fermes sont généralement des éoliennes à axe de rotation horizontal qui disposent d'un système pour orienter l'axe de rotation horizontal dans le sens de la direction du vent, afin de maximiser l'énergie récupérée par l'éolienne. Une éolienne permet de transformer l'énergie cinétique du vent en énergie électrique ou mécanique. Pour la conversion du vent en énergie électrique, elle se compose des éléments suivants :

- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite éventuellement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de la machine (modulateur, commande, multiplicateur, générateur, ...). La nacelle peut tourner pour orienter le rotor dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) qui convertit l'énergie recueillie en énergie électrique. Le rotor est potentiellement doté de systèmes de contrôle tels que des pales à angle variable ou des freins aérodynamiques ;

- éventuellement une transmission, composée notamment de deux axes (arbre mécanique du rotor et arbre mécanique de la machine électrique) reliés par un multiplicateur (boîte de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes et des fermes d'éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

**Technique antérieure**

Les fermes d'éoliennes sont sujettes à un phénomène communément appelé « effet de sillage », lorsque les perturbations créées par les turbines situées en amont du parc éolien créent des conditions de production d'électricité sous-optimales pour les autres turbines. En effet, en aval de l'éolienne un sillage tourbillonnaire se forme, et dans ce sillage la vitesse moyenne du vent est diminuée, car l'éolienne a capté une partie de l'énergie cinétique du vent et l'intensité de turbulence est augmentée.

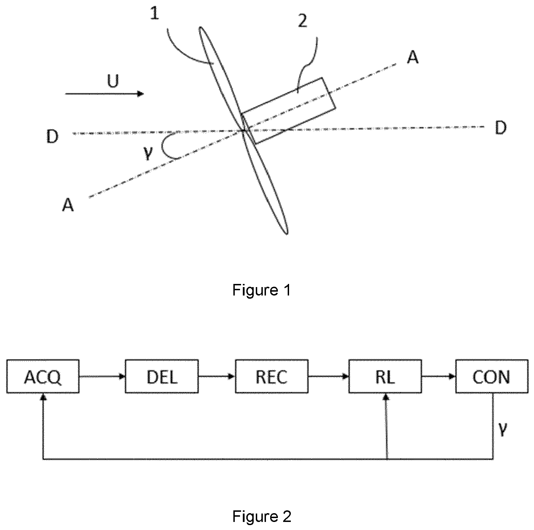

Une stratégie commune pour maximiser la production d'énergie d'une éolienne consiste à orienter son rotor afin que celui-ci soit face au vent. L'angle entre le rotor et la direction du vent, appelé angle de lacet (« yaw » en anglais), est alors de 0°. La figure 1 illustre schématiquement et de manière non limitative l'angle de lacet. La figure 1 est une vue de dessus d'une éolienne. L'éolienne comprend des pales 1 et une nacelle 2, orientées selon une direction AA. Le vent est représenté par la flèche U, ayant une direction DD. L'angle $\gamma$ entre la direction AA et la direction DD est l'angle de lacet. Lorsque la turbine de l'éolienne est alignée avec la direction du vent, cet angle $\gamma$ est nul.

Dans les parcs éoliens, cependant, appliquer cette stratégie (angle de lacet nul) à toutes les turbines, selon une méthode dite « gloutonne », rend le parc sujet à ce qu'on appelle l'effet de sillage : lorsqu'une éolienne extrait de l'énergie du vent, la vitesse du vent en aval diminue et sa turbulence augmente. Cela conduit à des conditions sous-optimales pour la production d'énergie des turbines situées en aval, les pertes en production totale pouvant atteindre les 40% en mer. Un certain nombre d'actionneurs contrôlables peuvent être utilisés pour réduire cet effet : la capture de puissance peut être influencée en contrôlant l'orientation des pales ou le couple du générateur, le sillage d'une turbine peut être dévié sous les turbines en aval en inclinant le plan du rotor, ou sur le côté en modifiant le lacet, une technique connue sous le nom anglais de « wake steering » (direction de sillage).

Pour corriger ce problème, une stratégie consiste à utiliser les actionneurs de lacet (« yaw » en anglais) pour désaligner les turbines par rapport à la direction du vent incident : cela permet une redirection des sillages pour limiter l'impact sur les turbines en aval. Trouver les angles de lacet optimaux (qui maximisent la puissance électrique totale de la ferme d'éoliennes) est un problème complexe.

Pour ce problème complexe, des approches traditionnelles de contrôle peuvent être envisagées : elles utilisent un modèle de propagation du vent dans un parc éolien, et optimisent les angles de lacet par rapport à cette approximation. Divers modèles utilisant des approximations analytiques ou des calculs numériques ont été proposés, mais de tels modèles manquent cependant de précision et ignorent la dynamique du vent turbulent et la propagation du sillage, conduisant à une mauvaise estimation des effets de sillage dans les parcs éoliens. Il existe des modélisations de plus haute-fidélité, qui tiennent compte de l'advection, de la déviation, des méandres et de la fusion du sillage, mais elles sont très coûteuses en temps et en ressources de calcul, ce qui décourage leur utilisation pour une optimisation en temps réel.

Il est possible de s'affranchir de ces contraintes en utilisant des méthodes sans modèle. L'apprentissage par renforcement (RL pour « reinforcement learning » en anglais) en est un exemple : ses méthodes apprennent par essai-erreur, et déduisent les actions optimales uniquement en observant les réponses d'un système aux changements en entrée. Cette approche d'apprentissage en ligne est particulièrement intéressante en raison des incertitudes de modélisation, qui rendent nécessaire d'oublier sur le terrain certains comportements sous-optimaux appris en modélisation. Mais la combinaison avec une approche décentralisée n'est pas évidente : les algorithmes décentralisés limitent l'observabilité du problème pour chaque turbine, rendant leur environnement non stationnaire. Pendant ce temps, les dynamiques de propagation du vent empêchent l'observation de l'impact d'un contrôleur jusqu'à ce que le sillage se soit propagé en aval, et rend l'affectation de la variation de puissance au bon contrôleur plus difficile en raison de l'effet cumulé des multiples sillages.

Des méthodes d'apprentissage par renforcement ont été également utilisées pour le contrôle de la production automatique via contrôle du lacet pour un parc éolien : le document « S. Vijayshankar, P. Stanfel, J. King, E. Spyrou, and K. Johnson, Deep reinforcement learning for automatic génération control of wind farms, in 2021 American Control Conférence (ACC), pp. 1796±1802, 2021 » utilise l'algorithme d'apprentissage profond centralisé Deep Deterministic Policy Gradient (DDPG) avec le facteur d'induction axial comme variable de contrôle. Dans le document « H. Dong, J. Zhang, and X. Zhao, Intelligent wind farm control via deep reinforcement learning and high-fidelity simulations, Applied Energy, vol. 292, no. C, 2021 », le DDPG est combiné à un apprentissage supervisé hors ligne, ce qui entraîne une augmentation significative de la puissance de sortie évaluée dans des simulations de parcs éoliens de haute-fidélité. Ces méthodes centralisées voient cependant la dimension de leur problème croître avec le nombre de turbines, ce qui soulève la question de l'extensibilité à de plus grandes fermes d'éoliennes. En particulier, dans ce deuxième document (DONG et al., 2021), les auteurs exploitent une symétrie spécifique à l'agencement des turbines dans leur cas d'usage pour réduire la dimension du problème, mais cela ne se transfère pas à d'autres agencements de ferme.

Pour résoudre ce problème, des méthodes d'apprentissage décentralisé ont été testées et ont entraîné une augmentation significative de la production totale d'électricité sur plusieurs simulations de parcs éoliens. Mais la majorité de ces méthodes ignorent les temps de propagation des sillages dans le parc éolien (notamment dans le document « Z. Xu, H. Geng, B. Chu, M. Qian, and N. Tan, Model-free optimization scheme for efficiency improvement of wind farm using decentralized reinforcement learning, IFAC-PapersOnLine, vol. 53, no. 2, pp. 12103±12108, 2020. 21st IFAC World Congress »). Ces méthodes ont été testées sur des simulateurs qui négligent les temps de propagation du sillage. Or, si on applique ces méthodes en prenant en compte les temps de propagation de sillage, ces méthodes ne sont plus aussi performantes, notamment pour la convergence et pour la puissance produite. De plus, il est démontré dans le document « P. Stanfel, K. Johnson, C. J. Bay, and J. King, A distributed reinforcement learning yaw control approach for wind farm energy capture maximization*, in 2020 American Control Conférence (ACC), pp. 4065±4070, 2020 » que des méthodes de contrôle du lacet efficaces peuvent être rendues complètement inopérantes lorsque le temps de propagation du sillage est pris en compte dans des simulations plus réalistes.

Les demandes de brevet EP3997335 et US2022186709 décrivent également des méthodes d'apprentissage par renforcement. Toutefois, aucune de ces méthodes ne permet une gestion du délai de propagation du sillage dans la ferme d'éoliennes. De plus, dans la demande de brevet EP3997335, seule une portion d'une ferme d'éoliennes est considérée, ce qui ne permet pas un contrôle optimal sur l'ensemble de la ferme d'éoliennes. En outre, dans la demande de brevet US2022186709, l'objectif résolu concerne la stabilisation de la puissance en sortie du parc éolien sous conditions de vent variés. Cette méthode ne permet donc pas notamment une maximisation de la puissance produite.

Peu de stratégies ont été utilisées pour traiter le temps de propagation du sillage dans les problèmes d'optimisation des parcs éoliens. Dans le document précité (DONG et al., 2021), le problème est délégué à un algorithme d'apprentissage qui apprend à prédire l'impact d'un changement de lacet à partir de mesures faites à lacet constant avant le déploiement dans le parc éolien. Cela découple toutefois le signal de récompense de la sortie actuelle de la ferme d'éoliennes, ce qui limite l'adaptabilité de l'algorithme et le rend vulnérable à la défaillance d'une turbine individuelle. Dans le document précité (STANFEL et al., 2020) le parc éolien est divisé en sous-ensembles au sein desquels une seule turbine à la fois est autorisée à changer de lacet, une stratégie dite de « verrouillage ». Cependant, cette stratégie de verrouillage ralentit excessivement la convergence pour tous les agents.

**Résumé de l'invention**

L'invention a pour but de contrôler une ferme d'éoliennes en temps réel pour maximiser la puissance électrique produite, quelle que soit l'implémentation des éoliennes au sein de la ferme d'éoliennes, et avec une convergence rapide. Dans ce but, la présente invention concerne un procédé de contrôle d'une ferme d'éoliennes, dans lequel on met en oeuvre de manière décentralisée (pour chaque éolienne) une méthode d'apprentissage par renforcement, pour laquelle la récompense est calculée en fonction d'un temps de propagation du sillage. Ainsi, la récompense est bien représentative de l'effet de la dernière action (contrôle du lacet antérieur), ce qui permet de maximiser la puissance produite par la ferme d'éoliennes. La mise en oeuvre d'une méthode d'apprentissage par renforcement pour chaque éolienne permet l'adaptation du procédé pour toute ferme d'éoliennes, et permet aussi une convergence rapide.

En outre l'invention concerne une ferme d'éoliennes apte à mettre en oeuvre le procédé de contrôle.

L'invention concerne un procédé de contrôle d'une ferme d'éoliennes, chaque éolienne de ladite ferme d'éoliennes comprenant un actionneur pour modifier un point de fonctionnement de ladite éolienne, notamment l'angle de lacet de ladite éolienne, l'angle de lacet étant l'angle formé entre une turbine de ladite éolienne et une direction du vent. Pour ce procédé, on met en oeuvre les étapes suivantes :

a. On acquiert une puissance produite par chaque éolienne, une vitesse et une direction du vent, et l'angle de lacet de chaque éolienne ;

b. Pour chaque éolienne, on détermine un délai de propagation de sillage formé par ladite éolienne, en fonction de ladite vitesse et ladite direction du vent acquises, ainsi que d'un agencement desdites éoliennes au sein de ladite ferme d'éoliennes ;

c. Pour chaque éolienne, on détermine une valeur d'une récompense représentant un impact d'un contrôle de l'éolienne notamment sur la somme des puissances produites par toutes les éoliennes de ladite ferme d'éolienne, ladite récompense étant calculée en prenant en compte ledit délai de propagation de sillage déterminé ;

d. Pour chaque éolienne, on applique une méthode d'apprentissage automatique par renforcement pour déterminer un point de fonctionnement cible de ladite éolienne en fonction de ladite récompense déterminée et de l'angle de lacet antérieur ; et

e. On contrôle le point de fonctionnement de chaque éolienne en appliquant ledit point de fonctionnement cible déterminé au moyen dudit actionneur.

Selon un mode de réalisation, on détermine ledit délai de propagation de sillage au moyen d'une hypothèse de turbulence figée de Taylor.

Conformément à une mise en oeuvre, on détermine ledit délai de propagation de sillage en prenant en compte une distance limite de sillage.

Avantageusement, ladite méthode d'apprentissage par renforcement est une méthode de Q-learning de Watkins.

Selon un aspect, pour chaque éolienne, on détermine ladite récompense lorsque la durée écoulée depuis le dernier contrôle est supérieure audit délai de propagation de sillage déterminé.

Selon une configuration, ledit contrôle de l'angle de lacet est une variation d'un pas fixe dudit angle de lacet.

De manière avantageuse, on acquiert ladite vitesse et ladite direction du vent par mesure au moyen d'un capteur LiDAR, ou d'un anémomètre, ou par mesure au moyen d'un système de contrôle et d'acquisition de données en temps réel.

Conformément à un mode de réalisation, l'angle de lacet acquis est ledit angle de lacet contrôlé antérieur.

Selon une mise en oeuvre, on détermine ladite récompense en prenant en compte une moyenne des puissances produites pendant un intervalle de temps prédéterminé.

De plus, l'invention concerne une ferme d'éoliennes, pour laquelle chaque éolienne de ladite ferme d'éoliennes comprend un actionneur pour modifier un point de fonctionnement de l'éolienne, notamment l'angle de lacet de ladite éolienne, l'angle de lacet étant l'angle formé entre la turbine de ladite éolienne et une direction du vent. Ladite ferme d'éoliennes comprend des moyens informatiques pour mettre en oeuvre le procédé de contrôle d'une ferme d'éoliennes selon l'une des caractéristiques précédentes.

D'autres caractéristiques et avantages du procédé et du système selon l'invention, apparaîtront à la lecture de la description ci-après d'exemples non limitatifs de réalisations, en se référant aux figures annexées et décrites ci-après.

**Liste des figures**

La figure 1, déjà décrite, illustre l'angle de lacet d'une éolienne.

La figure 2 illustre les étapes du procédé de contrôle selon un mode de réalisation de l'invention.

La figure 3 illustre deux implémentations de ferme d'éoliennes pour deux exemples.

La figure 4 illustre, pour les deux exemples de la figure 3, l'effet de sillage de chaque éolienne, avec un procédé de contrôle selon l'art antérieur.

La figure 5 illustre, pour le premier exemple, des courbes de puissance totale produite par la ferme d'éoliennes en fonction du temps, pour une méthode selon l'art antérieur et pour le procédé selon un mode de réalisation.

La figure 6 illustre, pour le premier exemple, les courbes de l'angle de lacet de chaque éolienne en fonction du temps.

La figure 7 illustre, pour le premier exemple, les courbes de puissance produite de chaque éolienne en fonction du temps.

La figure 8 illustre, pour le deuxième exemple, des courbes de puissance totale produite par la ferme d'éoliennes en fonction du temps, pour une méthode selon l'art antérieur et pour le procédé selon un mode de réalisation.

La figure 9 illustre, pour le deuxième exemple, les courbes de l'angle de lacet de chaque éolienne en fonction du temps.

La figure 10 illustre, pour le deuxième exemple, les courbes de puissance produite de chaque éolienne en fonction du temps.

**Description des modes de réalisation**

La présente invention concerne un procédé de contrôle en temps réel d'une ferme d'éoliennes. Une ferme d'éoliennes, également appelé parc éolien ou centrale éolienne est un site regroupant une pluralité d'éoliennes produisant de l'électricité. Chaque éolienne (également appelée par abus de langage turbine) de la ferme d'éoliennes comprend un actionneur pour modifier un point de fonctionnement de l'éolienne. Un exemple de point de fonctionnement peut être l'angle de lacet (de l'anglais « yaw ») de l'éolienne. D'autres points de fonctionnement peuvent être notamment le bridage de l'éolienne, ou la modification de la courbe de puissance de l'éolienne. La position des éoliennes au sein de la ferme d'éoliennes, appelée également agencement des éoliennes ou implémentation des éoliennes, est préalablement connue.

Dans la suite de la description, seul le contrôle de l'angle de lacet est décrit, toutefois d'autres points de fonctionnement peuvent être contrôlés.

Le procédé selon l'invention comprend les étapes suivantes :

1) Acquisition des puissances produites, de la vitesse et direction du vent, des angles de lacet

2) Détermination du délai de propagation du sillage de chaque éolienne

3) Détermination d'une récompense pour chaque éolienne

4) Application d'une méthode d'apprentissage par renforcement pour chaque éolienne

5) Contrôle de chaque éolienne

Les étapes 2 à 4 peuvent être mises en oeuvre par des moyens informatiques, notamment un ordinateur, un processeur ou un calculateur. Les étapes sont détaillées dans la suite de la description. Les étapes sont réalisées en parallèle pour chaque éolienne, ainsi le procédé est décentralisé. De plus, le procédé ne met en oeuvre aucun modèle physique, et s'appuie sur les données réelles mesurées au sein de la ferme, ce qui le rend compétitif en temps de calcul, en représentativité et en précision. Ces étapes sont réalisées en continu en temps réel ; les étapes sont répétées à chaque pas de temps.

La figure 2 illustre, schématiquement et de manière non limitative, les étapes du procédé du contrôle de ferme d'éoliennes selon un mode de réalisation de l'invention. On acquiert (ACQ) les puissances produites par toutes les éoliennes de la ferme d'éoliennes, la vitesse et la direction du vent, et les angles de lacet des éoliennes ($\gamma$). On détermine, pour chaque éolienne de la ferme d'éoliennes, un délai de propagation (DEL) du sillage de l'éolienne en fonction de la vitesse et la direction du vent et du positionnement des éoliennes. On détermine, pour chaque éolienne, une récompense (REC) représentant l'impact d'un contrôle de l'éolienne sur la somme des puissances produites en prenant en compte le délai de propagation. On applique pour chaque éolienne, une méthode d'apprentissage par renforcement (RL) pour déterminer un angle de lacet de l'éolienne cible (ou un point de fonctionnement cible), à partir d'un angle de lacet antérieur ($\gamma$) (ou point de fonctionnement antérieur) et de la récompense déterminée. On contrôle (CON) chaque éolienne en appliquant l'angle de lacet cible (ou le point de fonctionnement cible) à l'éolienne.

1) <u>Acquisition des puissances produites, de la vitesse et direction du vent, des angles de lacet</u>

Lors de cette étape, on acquiert, par des moyens de mesure ou d'estimation :

- La puissance électrique produite par chaque éolienne,
- La vitesse du vent, notamment la vitesse du vent non perturbé mesurée à l'entrée de la ferme d'éoliennes,
- La direction du vent, notamment la direction du vent à l'entrée de la ferme d'éoliennes, et
- L'angle de lacet de chaque éolienne.

Selon un mode de réalisation, la vitesse et la direction du vent peuvent être mesurées, notamment au moyen d'un capteur LiDAR (acronyme de l'expression en langue anglaise « light détection and ranging » pouvant être traduite par télédétection par Laser), d'un anénomètre, ou par des mesures au moyen d'un système de contrôle et d'acquisition de données en temps réel SCADA (de l'anglais : « Supervisory Control And Data Acquisition »), ou par tout capteur analogue. Un système de contrôle et d'acquisition de données en temps réel SCADA est un système de télégestion à grande échelle permettant de traiter en temps réel un grand nombre de télémesures et de contrôler à distance des installations techniques. C'est une technologie industrielle dans le domaine de l'instrumentation, dont les implémentations peuvent être considérées comme des structures d'instrumentation incluant une couche de type intergiciel (de l'anglais « middleware »). On peut déduire de ces mesures la vitesse du vent non perturbé à l'entrée de la ferme d'éoliennes, l'entrée de la ferme d'éoliennes étant définie en fonction de la direction du vent.

Conformément à une mise en oeuvre, la puissance électrique produite par chaque éolienne peut être mesurée par le système de contrôle et d'acquisition de données en temps réel SCADA, ou par des mesures de courant et de tension délivrés par chaque éolienne.

Selon un aspect de l'invention, l'angle de lacet de chaque éolienne acquis peut être l'angle de lacet contrôlé à un instant antérieur. Alternativement, l'angle de lacet peut être mesuré par un capteur, notamment un capteur angulaire.

2) <u>Détermination du délai de propagation du sillage de chaque éolienne</u>

Lors de cette étape, pour chaque éolienne, on détermine un délai de propagation du sillage formé par l'éolienne, en fonction de la vitesse et la direction du vent (acquises à l'étape 1), et en fonction de l'implémentation des éoliennes au sein de la ferme d'éoliennes. L'effet de sillage correspond aux perturbations et turbulences formées par une éolienne dans le flux de vent. Le sillage formé par une éolienne impacte les éoliennes en aval de cette éolienne dans la direction du vent. L'implémentation des éoliennes correspond à l'agencement des éoliennes au sein de la ferme. En d'autres termes, l'implémentation des éoliennes correspond à la position relative des éoliennes au sein de la ferme d'éoliennes. L'implémentation des éoliennes et la vitesse et la direction du vent permettent de déterminer les éoliennes en amont et en aval de chaque éolienne. Cette étape permet de prendre en compte le temps de propagation du sillage dans les problèmes d'optimisation des parcs éoliens.

Selon un mode de réalisation de l'invention, on peut approximer le délai de propagation du sillage pour chaque éolienne au moyen de l'hypothèse de turbulence figée (de l'anglais « Turbulence (or Taylor) Frozen Hypothesis » ou « frozen wake ») de Taylor. Par exemple, le délai de propagation $d_{i,j}$ de la turbine en amont i à une turbine en aval j peut être déterminé au moyen de la formule suivante : $d_{i,j} = \frac{c_{i,j}}{u^{\infty}}$ avec $c_{i,j}$ la distance entre les turbines i et j selon l'axe de la direction du vent, et $u^{\infty}$ la vitesse du vent non perturbé mesurée à l'entrée de la ferme d'éoliennes (obtenu à l'étape 1.

Selon une mise en oeuvre de ce mode de réalisation de l'invention, la formule de délai de propagation peut comprendre un coefficient multiplicateur supérieur à 1.

En variante, la formule du délai de propagation peut prendre en compte des zones d'induction en amont du rotor, qui permet de relaxer l'hypothèse de turbulence figée avec une durée plus réaliste prenant en compte les décélérations associées.

Selon un aspect de l'invention, la détermination du délai de propagation de sillage peut prendre en compte une distance limite de sillage. En effet, les perturbations dans le champ de vent dues à une turbine i deviennent moins importantes au fur et à mesure que la distance à son rotor augmente et que le vent retrouve des conditions similaires au flux libre à l'entrée de la ferme, son effet de sillage peut donc être négligeable au-delà d'une certaine distance. Ainsi, grâce à cette distance limite, le délai de propagation jusqu'à toute turbine j située au-delà de cette distance peut ne pas être pris en compte pour calculer le délai de réception de la récompense.

Par exemple, on peut déterminer une matrice de temps de propagation de sillage $D_{i,j}$ pour chaque paire de turbines (i, j) de la ferme d'éoliennes. Cette matrice de temps de propagation de sillage $D_{i,j}$ peut s'écrire, pour tous couples de turbines i, j avec $0 \leq i,j \leq M$, avec M le nombre d'éoliennes de la ferme d'éoliennes :

$$D_{i,j} = \begin{cases} m \times d_{i,j}, \text{si } j \text{ en aval de } i \text{ } et \text{ } c_{i,j} \leq d_{lim} \\ 0 \text{ sinon} \end{cases}$$

Avec m un coefficient multiplicateur supérieur à 1, $d_{i,j}$ délai de propagation (par exemple issu de l'hypothèse de turbulence figée de Taylor) de la turbine en amont i à une turbine en aval j, $c_{i,j}$ une distance entre les deux turbines i et j selon l'axe de la direction du vent, $d_{lim}$ une distance limite de sillage.

3) Détermination d'une récompense pour chaque éolienne

Lors de cette étape, pour chaque éolienne, on détermine une valeur d'une récompense représentant l'impact d'un contrôle de l'éolienne notamment sur la somme des puissances produites par toutes les éoliennes de la ferme d'éoliennes, la récompense étant déterminée en fonction du délai de propagation du sillage déterminé à l'étape 2. La récompense est un paramètre de la méthode d'apprentissage par renforcement, qui sera décrite à l'étape 4. Autrement dit, la récompense est une valeur d'une fonction récompense d'une méthode d'apprentissage automatique par renforcement, qui sera décrite à l'étape 4. La récompense associée à un état permet à la méthode d'apprendre automatiquement une action. Si la récompense est positive, l'action prise antérieurement est favorable, ce qui favorise cette action par l'apprentissage automatique. Etant donné qu'une modification d'un angle de lacet d'une éolienne (ou tout autre point de fonctionnement) a un impact avec retard sur les éoliennes en aval, la récompense est déterminée en retard en fonction du délai de propagation du sillage déterminé à l'étape 2.

Selon un mode de réalisation, on détermine la récompense en mesurant la production d'énergie des turbines en aval d'une éolienne considérée au moment de l'impact estimé au moyen du délai de propagation. Ainsi la présente invention permet de réduire les incertitudes.

Chaque éolienne reçoit donc une fonction de récompense différente en fonction de son emplacement dans le parc éolien. Enfin, pour réduire l'influence de la puissance nominale sur l'évaluation de l'impact des différents lacets, des augmentations en pourcentage plutôt qu'en valeurs brutes peuvent être prises en compte. On peut utiliser le signe de la variation mesurée comme signal de récompense et on peut appliquer un seuil pour filtrer le bruit. Par exemple, on peut définir, pour chaque turbine i (compris entre 1 et M, M étant le nombre d'éoliennes de la ferme d'éoliennes), une récompense $r_{i,k}$ pour chaque pas de temps k :

$$r_{i,k} = \begin{cases} 1 \text{ si } \dfrac{V_{i,2} - V_{i,1}}{V_{i,1}} > \delta \\ -1 \text{ si } \dfrac{V_{i,2} - V_{i,1}}{V_{i,1}} \leq -\delta \\ 0 \text{ sinon} \end{cases}$$

Avec $\delta$ un seuil positif, $V_{i,1} = \sum_{j=1}^{M} P_{j,k}$ et $V_{i,2} = \sum_{j=1}^{M} P_{j,k+D_{i,j}}$, $P_{j,k}$ la puissance produite par l'éolienne j au pas de temps k, $P_{j,k+D_{i,j}}$ la puissance produite par l'éolienne j au pas de temps k auquel on ajoute le délai de propagation de sillage $D_{i,j}$ entre la turbine i et j (déterminé à l'étape précédente). Ainsi, la récompense est positive si la somme des puissances a augmenté d'une quantité (positive) supérieure à un seuil positif, la récompense est négative si la somme des puissances a diminué d'une quantité inférieure ou égale à un seuil négatif, et la récompense est nulle dans l'intervalle.

De plus, pour tenir compte de la variation de la puissance instantanée due à la turbulence du vent, on peut faire une moyenne des mesures de puissance produite par chaque turbine : en définissant $\lambda \geq 1$ la taille de la fenêtre de moyenne. En d'autres termes, on peut déterminer la récompense en prenant en compte une moyenne des puissances produites par les éoliennes pendant un intervalle de temps prédéterminé (taille de la fenêtre moyenne $\lambda$).

Conformément à une mise en oeuvre de l'invention, on peut déterminer, pour chaque éolienne, la récompense, si la durée écoulée depuis le dernier contrôle antérieur est supérieure au délai de propagation de sillage déterminé. Ainsi, on détermine la récompense uniquement lorsque suffisamment de temps s'est écoulé depuis la réalisation du dernier contrôle antérieur, de manière à bien pouvoir observer l'impact du dernier contrôle antérieur sur les puissances produites par les éoliennes.

4) Application d'une méthode d'apprentissage par renforcement pour chaque éolienne

Lors de cette étape, pour chaque éolienne, on applique une méthode d'apprentissage automatique par renforcement pour déterminer un angle de lacet cible (ou point de fonctionnement cible) de l'éolienne, en fonction de la récompense déterminée à l'étape 3, et en fonction de l'angle de lacet antérieur (ou du point de fonctionnement antérieur). L'angle de lacet cible correspond à une consigne de l'angle de lacet pour l'éolienne. Le point de fonctionnement cible correspond à une consigne du point de fonctionnement. L'apprentissage par renforcement consiste pour un agent autonome (en l'occurrence une éolienne de la ferme d'éoliennes), à apprendre les actions à prendre (en l'occurrence modifier l'angle de lacet) à partir d'expériences, de façon à optimiser une récompense quantitative au cours du temps (en l'occurrence la récompense déterminée à l'étape 3 qui prend en compte le délai de propagation du sillage). L'agent est plongé au sein d'un environnement (en l'occurrence la ferme d'éoliennes, et le vent), et prend ses décisions en fonction de son état courant (en l'occurrence l'angle de lacet actuel). En retour, l'environnement procure à l'agent une récompense, qui peut être positive ou négative. Pour l'invention, l'approche est à récompense différée. L'agent cherche au travers des réalisations passées, une stratégie optimale, en ce sens qu'il maximise la somme des récompenses au cours du temps. Cette approche d'apprentissage en ligne est particulièrement intéressante en raison des incertitudes de modélisation. De plus, cette approche permet une détermination en temps réel. Une telle méthode d'apprentissage est appliquée à chaque éolienne de la ferme d'éoliennes, ce qui permet de décentraliser l'optimisation.

Selon un mode de réalisation de l'invention, la méthode d'apprentissage par renforcement peut être une méthode de Q-learning de Watkins. Une telle méthode d'apprentissage par renforcement est décrite notamment dans le document : « C. WATKINS, P. DAYAN, TECHNICAL NOTE - Q-Learning , Machine Learning 8, 279-292 (1992), 1992 Kluwer Academic Publishers, Boston, Manufactured in the Netherlands ». En variante, d'autres méthodes d'apprentissage par renforcement peuvent être utilisées, notamment des méthodes d'apprentissage dites « policy-gradient » de type acteur-critique, ou toute méthode d'apprentissage analogue. Dans ces approches, chaque agent dispose de deux éléments : un acteur qui essaie de prédire le contrôle optimal pour l'état courant, et une critique qui évalue l'efficacité du contrôle prédit par la critique. Les algorithmes de ce type ont pour nom, par exemple : A2C (Advantage Actor Critic), DDPG (Deep Deterministic Policy Gradient), PPO (Proximal Policy Optimization).

Formellement, pour le mode de réalisation mettant en oeuvre la méthode d'apprentissage par renforcement mettant en oeuvre la méthode de Q-learning, on peut définir un processus de décision de Markov (MDP) {S, A, r, P}, avec S l'espace d'état, A un espace d'action, P la matrice des probabilités de transition de l'environnement et r: S $\times$ A $\rightarrow$ R une fonction de récompense. En d'autres termes, à l'instant t, un agent situé en un état $s_t$, choisit une action $a_t$ et reçoit une récompense associée $r_t$. Dans la suite, le pas de temps continu est noté t, et le temps discret est noté k.

L'application qui associe à chaque état observé une action correspondante, ou une distribution de probabilités sur les actions possibles en cet état, est appelée politique $\pi$ ; on dit qu'un agent suit une politique $\pi$. La séquence d'états, actions et récompenses $\{s_0, a_0, r_0, s_1, a_1, ..., s_T, a_T, r_T\}$ observée par l'agent lorsqu'il interagit avec l'environnement est appelée une trajectoire. La trajectoire suivie dépend de la politique de l'agent, mais aussi de la dynamique de l'environnement ; pour une action prise en un état donné, l'état suivant et la récompense obtenue ne sont pas toujours identiques. On parle de probabilités de transition d'un état à l'autre. Dans notre cas par exemple, des facteurs exogènes comme les aléas du vent peuvent augmenter ou baisser la récompense. On cherche donc à maximiser l'espérance de son rendement.

On peut écrire A(s) le sous-ensemble d'actions a $\in$ A disponibles dans l'état s. Un agent interagit avec l'environnement en suivant une politique stochastique a $\sim \pi$(s), s $\in$ S, a $\in$ A(s), où $\pi$(a|s) est la probabilité de choisir l'action a lorsqu'il est dans l'état s. Si la politique est déterministe, il existe une action a' pour lequel $\pi$(a'|s) = 1 et on peut écrire directement a' = $\pi$(s). L'objectif de l'agent est alors de trouver une stratégie optimale $\pi^*$ qui maximise l'espérance E de la somme à l'infini de toutes ses récompenses actualisées, aussi appelé rendement actualisé :

$$\max_{\pi} E[G] = \max_{\pi} E\left[\sum_{k}^{\infty} \beta^k r(s_k, a_k)\right]$$

avec $0 < \beta < 1$ un facteur d'actualisation (en d'autres termes un facteur de pondération), $s_0$ un état initial, G est le rendement actualisé, soit la somme des récompenses futures actualisées, et $\{s_k, a_k\}$ : $k = 0 \ldots \infty$ la trajectoire de l'agent dans l'environnement sous la politique $\pi$. Pour une politique $\pi$, on peut définir la fonction $Q_\pi$ de valeur état-action (ou fonction q) pour $\pi$ comme l'espérance du rendement actualisé pour une paire état-action (a,s) : $Q_\pi (s, a) = E[G \mid s_0 = s, a_0 = a]$. C'est-à-dire, pour toute paire état-action (s, a), $Q_\pi (s, a)$ est la valeur espérée pour un agent qui choisit l'action a dans l'état s, puis suit la politique $\pi$ pour le reste de la trajectoire. On peut définir une fonction q optimale $Q^*$ telle que : $\forall (s, a)$, $Q^*(s, a) = \max_\pi Q_\pi(s, a)$.

Pour rechercher la meilleure politique dans un environnement donné, on peut directement tenter d'apprendre $Q^*$. L'algorithme Q-learning de Watkins conserve des estimations des valeurs q pour chaque paire (s, a) - on dit qu'il est tabulaire -, et met à jour de manière itérative une estimation $\hat{Q}$ de la fonction q optimale $Q^*$ à chaque pas de temps k :

$$\hat{Q}_{k+1}(s_k, a_k) = \hat{Q}_k(s_k, a_k) + l_k . TD_k$$

Dans laquelle $TD_k$ est l'estimateur d'erreur de Bellman pouvant être défini comme :

$$TD_k = r_k + \beta \max_{\bar{a} \in A(s_{k+1})} \hat{Q}_k(s_{k+1}, \bar{a}) - \hat{Q}_k(s_k, a_k)$$

avec $\beta \in (0,1)$ un facteur d'actualisation et $l_k$ un taux d'apprentissage au pas de temps k. $\hat{Q}$ converge alors avec probabilité de un vers $Q^*$ sous certaines conditions raisonnablement atteignables. En suivant une approche décentralisée où chaque turbine est modélisée par un agent, on considère M (M étant le nombre d'éoliennes dans la ferme d'éoliennes) espaces d'état $S_{i\,(1 \leq i \leq M)}$: $S_i = Y \times R^2$ (avec Y un espace d'angles de lacet admissibles, et R est l'ensemble des réels) tels que l'état observé un agent i à chaque pas de temps k est défini par :
$s_{i,k} = [\gamma_{i,k}, w_k]^T$ $\gamma_L \leq \gamma_{i,k} \leq \gamma_U$ avec $\gamma_L$ et $\gamma_U$ respectivement la limite inférieure et supérieure des valeurs de lacet, et $\gamma_{i,k}$ l'angle de lacet de l'éolienne i au pas de temps k et $w_k$ les conditions de vent acquises au pas de temps k, en d'autres termes la vitesse du vent et la direction du vent. Selon un exemple non limitatif, l'espace d'action peut être défini comme $A = \{-1°, 0°, 1°\}$.

Lorsqu'il y a un délai connu $c$ entre le moment où une action est envoyée à l'environnement et le moment où la récompense associée est collectée par l'agent, on dit que l'environnement est à récompense différée. On considère de plus le délai de pas de temps $c_d$, de telle sorte qu'avec $h$ la période d'échantillonnage - c'est-à-dire le temps en

$$c_d = \frac{c}{h} . \lceil c_d \rceil$$

secondes entre deux itérations de l'algorithme - on obtient $c_d = \frac{c}{h}$ . $\lceil c_d \rceil$ est alors le nombre de pas de temps avant que la récompense ne devienne disponible. Ce délai peut être géré en permettant à l'agent d'observer l'historique de tous les états reçus et actions prises durant le délai. En variante, on peut apporter une modification de la méthode d'apprentissage de Q-learning de Watkins appelée dQ(0) : au pas de temps k, au lieu de mettre à jour $\hat{Q}(s_k, a_k)$ des mises à jour sont effectuées pour l'action $\check{a}_k$ qui prend effet au pas de temps k. Cette approche flexible et facilement adaptable au cas décentralisé permet la gestion des temps de propagation du sillage dans les parcs éoliens.

La présente invention peut mettre en oeuvre une modification du procédé de mise à jour des estimateurs dans un algorithme d'apprentissage par renforcement. Pour le Q-learning qui mettait à jour $\hat{Q}(s_k, a_k)$ au pas de temps k, les mises à jour peuvent être effectuées pour l'action $a_{k-c_d}$ dont l'évaluation de l'impact sur la production du parc éolien - i.e. la récompense associée - vient d'être reçue. On peut ainsi restaurer la correspondance en attendant $c_d$ pas de temps avant de mettre à jour $\hat{Q}$. Cette approche utilise une définition d'un délai de récompense c pour chaque agent, qui doit correspondre au temps qu'il faut pour que l'impact d'une action soit pleinement observé sur les turbines en aval. Ce temps diffère en fonction de l'emplacement de la turbine dans le parc, et l'approche décentralisée utilisée à l'étape 2 permet de définir différents délais de récompense pour tous les agents.

Ainsi, selon un mode de réalisation, le délai de récompense au pas de temps $c_i$ pour chaque turbine i peut correspondre au nombre de pas de temps correspondant au plus grand délai estimé de propagation du sillage jusqu'à une autre turbine du parc. Pour ce mode de réalisation, la mise à jour de la méthode d'apprentissage Q-learning pour toute éolienne peut s'écrire :

$$\widehat{Q}_{,i,k+1}\left(s_{k-c_i}, a_{k-c_i}\right) = \widehat{Q}_{i,k}\left(s_{k\_c_i}, a_{k-c_i}\right) + l_k.\,TD_{dadQ,k}$$

$$TD_{dadQ,k} = r_{i,k} + \beta \max_{\overline{a}\in A\left(s_{i,k-c_i+1}\right)} \widehat{Q}_k\left(s_{i,k-c_i+1}, \overline{a}\right) - \widehat{Q}_k\left(s_{i,k-c_i}, a_{i,k}\right)$$

avec $(s_k, a_k) \sim b(a|s_k)$ la politique suivie par un agent et garantissant un certain degré d'exploration dans l'environnement, $\beta \in (0,1)$ un facteur d'actualisation et $l_k$ un taux d'apprentissage au pas de temps k, s l'état courant c'est-à-dire l'angle de lacet courant, a est l'action c'est-à-dire l'angle de lacet, r la récompense, $c_i$ le pas de temps correspondant au plus grand délai estimé de propagation du sillage jusqu'à une autre turbine du parc.

Une fois que $\widehat{Q}$ est déterminé, on en déduit l'action a (c'est-à-dire l'angle de lacet cible ou le point de fonctionnement cible). Pour cela, on peut choisir a selon une politique dite d'exploration b(a/s), qui choisit *argmax* ($\widehat{Q}(s, a')$) avec la plus grande probabilité, et toutes les autres actions avec des probabilités non nulles.

$$b(a'|s) = \frac{e^{\frac{\widehat{Q}(s,a')}{\tau}}}{\sum e^{\frac{\widehat{Q}(s,a)}{\tau}}}$$

Selon un mode de réalisation, on peut choisir une politique d'exploration de Boltzmann.
avec un $\tau = 0.1$. Plus $\tau$ est élevé, plus on explore dans l'espoir de découvrir de meilleures actions. Plus il est petit, plus on a tendance à choisir systématiquement la meilleure action selon nos estimations actuelles. Il est aussi possible de réduire $\tau$ et fur et à mesure de l'apprentissage.

<u>5) Contrôle de chaque éolienne</u>

Lors de cette étape, on contrôle chaque éolienne en appliquant l'angle de lacet cible (ou le point de fonctionnement cible) déterminé à l'étape 4. Pour cette étape, pour chaque éolienne, on contrôle l'actionneur du point de fonctionnement de l'éolienne. Notamment, on peut contrôler l'actionneur de l'angle de lacet de l'éolienne.

Selon un mode de réalisation, le contrôle de l'angle de lacet peut correspondre à une variation d'un pas fixe de l'angle de lacet. En d'autres termes, l'angle de lacet peut être augmenté d'un pas fixe, ou être diminué d'un pas fixe, ou peut rester constant. Le pas fixe peut être compris entre 0,5 et 5 degrés, de préférence entre 0,5 et 2 degrés, et peut valoir 1 degré. Ce mode de réalisation, permet d'éviter les changements brusques de l'angle de lacet, et par conséquent, les changements brusques du sillage.

En variante, le contrôle de l'angle de lacet peut correspondre à un contrôle à une valeur précise de l'angle de lacet.

En outre, l'invention concerne une ferme d'éoliennes. Chaque éolienne de la ferme d'éoliennes comprend un actionneur pour modifier l'angle de lacet de l'éolienne ou le point de fonctionnement de l'éolienne. En outre, la ferme d'éoliennes comprend des moyens informatiques, notamment un ordinateur, un processeur ou calculateur pour mettre en oeuvre le procédé de contrôle selon l'une quelconque des variantes ou des combinaisons de variantes décrites ci-dessous. La ferme d'éoliennes est par conséquent pilotée par les moyens informatiques. En particulier, les moyens informatiques permettent de :

- Acquérir les puissances produites par les éoliennes,
- Acquérir les angles de lacet de chaque éolienne,
- Déterminer le délai de propagation de sillage de chaque éolienne,
- Déterminer une récompense pour chaque éolienne,
- Déterminer un angle de lacet cible pour chaque éolienne ou un point de fonctionnement cible, et
- Contrôler l'angle de lacet de chaque éolienne ou le point de fonctionnement.

Les moyens informatiques peuvent être centralisés : la ferme d'éoliennes comporte une seule unité informatique qui met en oeuvre les étapes du procédé de contrôle, et qui communique avec a minima tous les actionneurs d'angle de lacet. Alternativement, chaque éolienne comprend une unité informatique, toutes les unités informatiques communiquant entre elles.

Selon un mode de réalisation, la ferme d'éoliennes peut comprendre un capteur de mesure du vent, notamment un capteur LiDAR ou un anémomètre.

Selon un aspect de l'invention, la ferme d'éoliennes peut comprendre des moyens de mesure SCADA.

Selon une option de réalisation, la ferme d'éoliennes peut comprendre des moyens de communication, notamment pour transmettre les données acquises à l'étape 1 et/ou pour communiquer les angles de lacet cibles aux contrôleurs.

Exemples

Les caractéristiques et avantages du procédé selon l'invention apparaitront plus clairement à la lecture des exemples d'application ci-après.

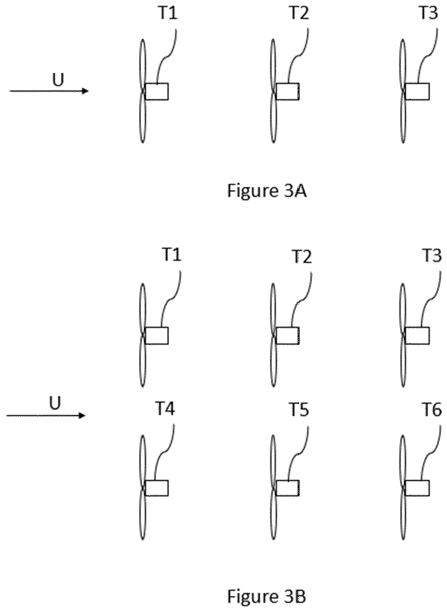

Pour ces exemples, on considère deux fermes éoliennes. Les deux fermes d'éoliennes sont représentées, schématiquement et de manière non limitative, en figure 3. La figure 3A correspond à la première ferme d'éoliennes, qui comprend trois éoliennes identiques alignées, et notées T1, T2, T3. Il s'agit d'éoliennes de 5 MW d'un diamètre de 126m. Les turbines sont séparées d'une distance de quatre diamètres. Pour ce premier exemple, le vent U est parallèle à l'alignement des éoliennes (ce qui correspond à la pire situation en termes d'effet de sillage). La Figure 3B correspond à la deuxième ferme d'éoliennes, qui comprend deux lignes parallèles de trois éoliennes identiques alignées, les éoliennes sont notées T1, T2, T3, T4, T5, et T6. Il s'agit d'éoliennes de 5 MW d'un diamètre de 126m. Au sein d'un alignement, les turbines sont séparées d'une distance de quatre diamètres, et les deux alignements sont séparées d'une distance de quatre diamètres. Pour ce deuxième exemple, le vent U est parallèle aux alignements des éoliennes (ce qui correspond à la pire situation en termes d'effet de sillage). Afin de reproduire des conditions de vent réalistes, on a utilisé un simulateur de vent turbulent pour générer une série temporelle de vecteurs de vitesse du vent 3D dans le champ d'écoulement. Le vent simulé a une vitesse moyenne de flux libre de 8 m/s avec une turbulence de 8%. Les exemples sont simulés sur un simulateur de parc éolien FAST.Farm développé par le National Renewable Energy Laboratory (NREL), qui est un simulateur prenant en compte les dynamiques complexes des effets de sillage, y compris les déficits de vitesse, l'advection, la déviation, les méandres et la fusion de sillage en présence de multiples turbines. Pour les simulations, la période d'échantillonnage est fixée à trois secondes.

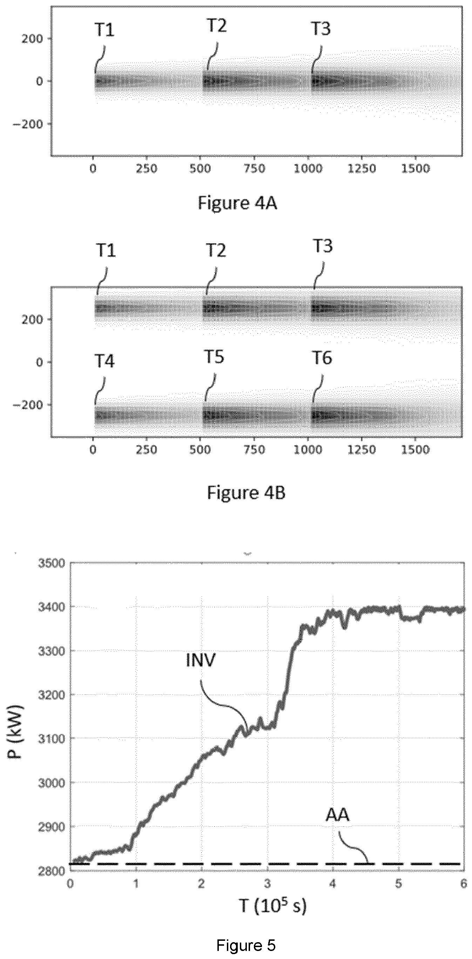

La figure 4 illustre, schématiquement, le sillage formé par les deux fermes d'éolienne, dans le cas où l'angle de lacet reste nul pour toutes les éoliennes. La figure 4A correspond à la ferme d'éoliennes de la figure 3A, et la figure 4B correspond à la ferme d'éoliennes de la figure 3B. Sur cette figure, plus la zone est foncée, plus l'effet de sillage est important. On remarque que l'effet de sillage est plus important pour la dernière turbine de chaque alignement (T3 pour la figure 4A, et T3 et T6 pour la figure 4B). Par conséquent, la puissance produite des turbines, notamment celles à la fin des alignements dans la direction du vent, est fortement perturbée, ce qui a un impact sur la puissance produite totale par la ferme d'éoliennes.

On a appliqué ensuite le procédé de contrôle selon l'invention, mettant en oeuvre la méthode de Q-learning de Watkins avec gestion de la récompense différée, telle que décrite ci-dessus, sur une période de 600 000 s, correspondant à 230 000 itérations. L'espace d'action de chaque agent est limité à 3 actions : {-1°, 0°, +1°}, pour une augmentation ou réduction correspondante de l'angle de lacet (en d'autres termes, l'angle de lacet cible peut augmenter de 1°, rester constant ou diminuer de 1°). Pour le premier exemple, on apprend donc 3 Q-tables de dimension $63 \times 3$ soit 189 paramètres. Pour le deuxième exemple, on apprend 6 Q-tables de dimension $63 \times 6$ pour 378 paramètres. On utilise une fenêtre pour la moyenne de puissance de $\lambda$ = 10min. Pour évaluer les performances de l'algorithme sans aucune connaissance préalable, toutes les valeurs du Q-table sont initialisées à q0 = 0,15. Les lacets sont initialisés à 0°, ce qui correspond à une stratégie naïve et gourmande où toutes les turbines sont faites pour faire face au vent.

La figure 5 illustre, pour le premier exemple, les courbes de puissance totale P en kW produite par la ferme d'éoliennes en fonction du temps T en seconde (c'est la somme des puissances produites par toutes les éoliennes). La courbe notée AA correspond à une méthode gardant tous les angles de lacet à 0°, et la courbe notée INV correspond au procédé selon l'invention. Par rapport à la puissance produite de la stratégie gourmande (où tous les lacets sont à 0°), le procédé selon l'invention augmente la puissance totale produite de la ferme d'éoliennes de 20%.

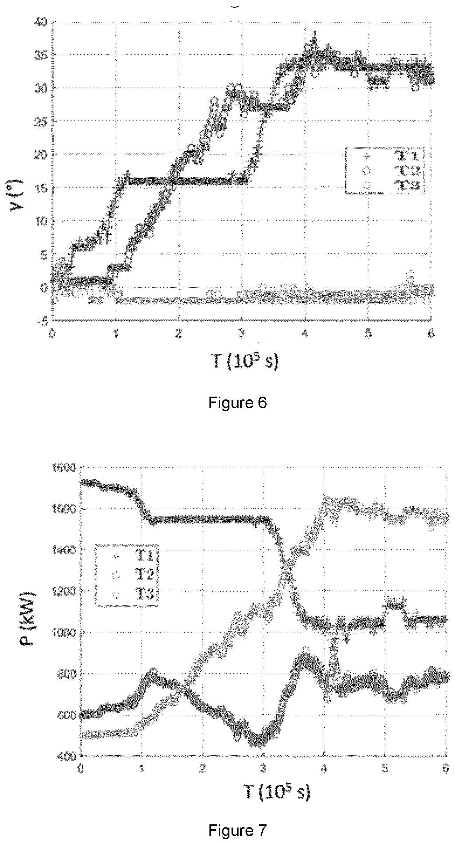

La figure 6 illustre, pour le premier exemple, les angles de lacet $\gamma$ en ° de chaque éolienne T1 à T3 en fonction du temps T en seconde. On remarque que les angles de lacet des deux premières turbines T1 et T2 dans la direction du vent varient fortement : ces deux turbines sont donc fortement désalignées avec la direction du vent pour maximiser la puissance produite. Au contraire, l'angle de lacet de la dernière turbine T3 dans la direction du vent est peu modifié.

La figure 7 illustre, pour le premier exemple, la puissance produite P en kW pour chaque éolienne T1 à T3 en fonction du temps T en seconde. On remarque que la puissance de l'éolienne T1 est dégradée par son désaxement. Toutefois, les puissances produites par les éoliennes T2 et T3 sont augmentées, en particulier pour l'éolienne T3 dont la puissance produite est multipliée par trois.

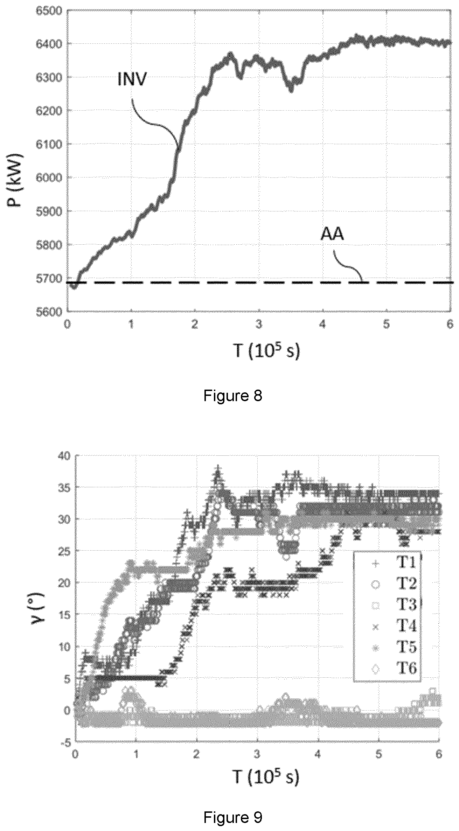

La figure 8 illustre, pour le deuxième exemple, les courbes de puissance totale produite par la ferme d'éoliennes P en kW en fonction du temps T en seconde (c'est la somme des puissances produites par toutes les éoliennes). La courbe notée AA correspond à une méthode gardant tous les angles de lacet à 0°, et la courbe notée INV correspond au procédé selon l'invention. Par rapport à la puissance produite de la stratégie gourmande (où tous les lacets sont à 0°), le procédé selon l'invention augmente la puissance totale produite de la ferme de 14%.

La figure 9 illustre, pour le deuxième exemple, les angles de lacet $\gamma$ en ° de chaque éolienne T1 à T6 en fonction du temps T en seconde. On remarque que les angles de lacet des deux premières turbines T1, T2, T4 et T5 de chaque alignement dans la direction du vent varient fortement : ces deux turbines sont donc fortement désalignées avec la direction du vent pour maximiser la puissance produite. Au contraire, l'angle de lacet des dernières turbines T3 et T6 des deux alignements dans la direction du vent est peu modifié.

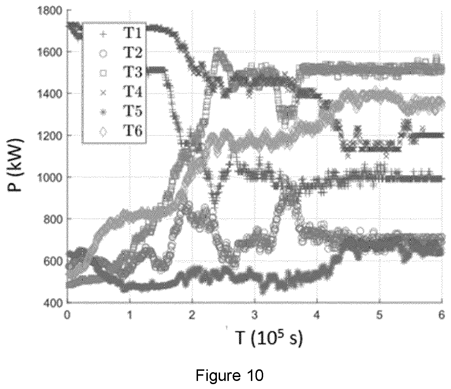

La figure 10 illustre, pour le deuxième exemple, la puissance produite P en kW pour chaque éolienne T1 à T6 en fonction du temps T en seconde. On remarque que les puissances produites des éoliennes T1 et T4 sont dégradées par leurs désaxements. Toutefois, les puissances produites par les éoliennes T2, T3, T5 et T6 sont augmentées, en particulier pour les éoliennes T3 et T6 dont les puissances produites sont multipliées par trois.

On peut noter en outre, que pour les deux exemples, l'algorithme converge autour de 450 000 s, ce qui correspond à 150 000 itérations. Malgré le doublement de la taille de la ferme entre les deux exemples, le temps de convergence reste sensiblement le même, démontrant un avantage clé par rapport aux approches centralisées ou avec verrouillage des turbines. De plus, comme prévu, les paires de turbines avec les mêmes positions dans les alignements convergent vers des valeurs similaires. Ces résultats valident la gestion de la récompense différée par la présente invention, pour l'apprentissage Q décentralisé et sensible aux retards, dans des conditions de vent turbulent réaliste et avec simulation dynamique du sillage. En outre, ces résultats montrent que le procédé selon l'invention maximise la puissance produite totale, s'adapte à plusieurs configurations de fermes d'éoliennes, et permet un contrôle en temps réel avec une convergence rapide.

**Revendications**

**1.** Procédé de contrôle d'une ferme d'éoliennes, chaque éolienne de ladite ferme d'éoliennes comprenant un actionneur pour modifier un point de fonctionnement de ladite éolienne, notamment l'angle de lacet de ladite éolienne, l'angle de lacet étant l'angle formé entre une turbine (1) de ladite éolienne et une direction du vent (U), **caractérisé en ce qu'**on met en oeuvre les étapes suivantes :

a. On acquiert (ACQ) une puissance produite par chaque éolienne, une vitesse et une direction du vent, et l'angle de lacet de chaque éolienne ;
b. Pour chaque éolienne, on détermine un délai de propagation de sillage (DEL) formé par ladite éolienne, en fonction de ladite vitesse et ladite direction du vent acquises, ainsi que d'un agencement desdites éoliennes au sein de ladite ferme d'éoliennes ;
c. Pour chaque éolienne, on détermine une valeur d'une récompense (REC) représentant un impact d'un contrôle de l'éolienne notamment sur la somme des puissances produites par toutes les éoliennes de ladite ferme d'éolienne, ladite récompense étant calculée en prenant en compte ledit délai de propagation de sillage déterminé ;
d. Pour chaque éolienne, on applique une méthode d'apprentissage automatique par renforcement (RL) pour déterminer un point de fonctionnement cible de ladite éolienne en fonction de ladite récompense déterminée et de l'angle de lacet antérieur ; et
e. On contrôle (CON) le point de fonctionnement de chaque éolienne en appliquant ledit point de fonctionnement cible déterminé au moyen dudit actionneur.

**2.** Procédé de contrôle d'une ferme d'éoliennes selon la revendication 1, dans lequel on détermine ledit délai de propagation de sillage (DEL) au moyen d'une hypothèse de turbulence figée de Taylor.

**3.** Procédé de contrôle d'une ferme d'éoliennes selon l'une des revendications précédentes, dans lequel on détermine ledit délai de propagation de sillage (DEL) en prenant en compte une distance limite de sillage.

**4.** Procédé de contrôle d'une ferme d'éoliennes selon l'une des revendications précédentes, dans lequel ladite méthode d'apprentissage par renforcement (RL) est une méthode de Q-learning de Watkins.

**5.** Procédé de contrôle d'une ferme d'éoliennes selon l'une des revendications précédentes, dans lequel, pour chaque éolienne, on détermine ladite récompense (REC) lorsque la durée écoulée depuis le dernier contrôle est supérieure audit délai de propagation de sillage déterminé.

**6.** Procédé de contrôle d'une ferme d'éoliennes selon l'une des revendications précédentes, dans lequel ledit point de fonctionnement est l'angle de lacet, et de préférence le contrôle de l'angle de lacet est une variation d'un pas fixe dudit angle de lacet.

**7.** Procédé de contrôle d'une ferme d'éoliennes selon la revendication 6, dans lequel l'angle de lacet acquis est ledit angle de lacet contrôlé antérieur.

8. Procédé de contrôle d'une ferme d'éoliennes selon l'une des revendications précédentes, dans lequel on acquiert ladite vitesse et ladite direction du vent par mesure au moyen d'un capteur LiDAR, ou d'un anémomètre, ou par mesure au moyen d'un système de contrôle et d'acquisition de données en temps réel.

9. Procédé de contrôle d'une ferme d'éoliennes selon l'une des revendications précédentes, dans lequel on détermine ladite récompense (REC) en prenant en compte une moyenne des puissances produites pendant un intervalle de temps prédéterminé.

10. Ferme d'éoliennes, pour laquelle chaque éolienne de ladite ferme d'éoliennes comprend un actionneur pour modifier un point de fonctionnement de l'éolienne, notamment l'angle de lacet de ladite éolienne, l'angle de lacet étant l'angle formé entre la turbine de ladite éolienne et une direction du vent, **caractérisée en ce que** ladite ferme d'éoliennes comprend des moyens informatiques pour mettre en oeuvre le procédé de contrôle d'une ferme d'éoliennes selon l'une des revendications précédentes.

Figure 1

Figure 2

Figure 3A

Figure 3B

Figure 4A

Figure 4B

Figure 5

Figure 6

Figure 7

Figure 8

Figure 9

Figure 10

Europäisches
Patentamt

European
Patent Office

Office européen
des brevets

# RAPPORT DE RECHERCHE EUROPEENNE

Numéro de la demande

**EP 23 21 1088**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2022/307468 A1 (GOLLNICK BERT [DE]) 29 septembre 2022 (2022-09-29) | 1,3-10 | INV. F03D7/02 |
| Y | * alinéas [0030] - [0161] * <br> * figures * | 2 | F03D7/04 |
| Y | Tuhfe Göcmen ET AL: "Possible Power Estimation of Down-Regulated Offshore Wind Power Plants", Possible Power Estimation of Down-Regulated Offshore Wind Power Plants., 31 décembre 2015 (2015-12-31), pages 1-161, XP055492230, DK Extrait de l'Internet: URL:http://orbit.dtu.dk/files/123865795/Revised_NewCover_TG_PhDThesis_PossPOW.pdf * alinéas [0002] - [0007] * * figures * | 2 | |
| A | EP 3 438 448 A1 (ELECTRICITE DE FRANCE [FR]) 6 février 2019 (2019-02-06) * abrégé * * figures * | 1-10 | DOMAINES TECHNIQUES RECHERCHES (IPC) <br><br> F03D |
| A | WO 2015/136687 A1 (HITACHI LTD [JP]) 17 septembre 2015 (2015-09-17) * abrégé * * figures * | 1-10 | |

Le présent rapport a été établi pour toutes les revendications

| Lieu de la recherche | Date d'achèvement de la recherche | Examinateur |
|---|---|---|
| La Haye | 25 mars 2024 | Rini, Pietro |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 21 1088

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-03-2024

| Document brevet cité au rapport de recherche | Date de publication | Membre(s) de la famille de brevet(s) | Date de publication |
|---|---|---|---|
| US 2022307468 A1 | 29-09-2022 | CN 114341488 A | 12-04-2022 |
| | | EP 3792484 A1 | 17-03-2021 |
| | | EP 3997335 A1 | 18-05-2022 |
| | | US 2022307468 A1 | 29-09-2022 |
| | | WO 2021052669 A1 | 25-03-2021 |
| EP 3438448 A1 | 06-02-2019 | EP 3438448 A1 | 06-02-2019 |
| | | FR 3069663 A1 | 01-02-2019 |
| WO 2015136687 A1 | 17-09-2015 | EP 3159537 A1 | 26-04-2017 |
| | | JP 6258466 B2 | 10-01-2018 |
| | | JP WO2015136687 A1 | 06-04-2017 |
| | | WO 2015136687 A1 | 17-09-2015 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3997335 A

- US 2022186709 A

**Littérature non-brevet citée dans la description**

- **S. VIJAYSHANKAR ; P. STANFEL ; J. KING ; E. SPYROU ; K. JOHNSON.** *Deep reinforcement learning for automatic génération control of wind farms, in 2021 American Control Conférence (ACC),* 2021, 1796-1802
- **H. DONG ; J. ZHANG ; X. ZHAO.** Intelligent wind farm control via deep reinforcement learning and high-fidelity simulations. *Applied Energy,* 2021, vol. 292 (C

- **Z. XU ; H. GENG ; B. CHU ; M. QIAN ; N. TAN.** Model-free optimization scheme for efficiency improvement of wind farm using decentralized reinforcement learning, IFAC-PapersOnLine. *21st IFAC World Congress,* 2020, vol. 53 (2), 12103-12108
- **P. STANFEL ; K. JOHNSON ; C. J. BAY ; J. KING.** A distributed reinforcement learning yaw control approach for wind farm energy capture maximization*. *2020 American Control Conférence (ACC),* 2020, 4065-4070
- **C. WATKINS ; P. DAYAN.** TECHNICAL NOTE - Q-Learning , Machine Learning. Kluwer Academic Publishers, 1992, vol. 8, 279-292